(19)

Europäisches
Patentamt
European
Patent Office
Office européen
des brevets

(11) **EP 4 422 833 B1**

(12) **EUROPEAN PATENT SPECIFICATION**

(45) Date of publication and mention
of the grant of the patent:
**18.02.2026 Bulletin 2026/08**

(21) Application number: **22802978.1**

(22) Date of filing: **18.10.2022**

(51) International Patent Classification (IPC):
**B25J 9/00** (2006.01)       **A61H 1/00** (2006.01)

(52) Cooperative Patent Classification (CPC):
**B25J 9/0006; A61H 2201/165**

(86) International application number:
**PCT/EP2022/078962**

(87) International publication number:
**WO 2023/072678 (04.05.2023 Gazette 2023/18)**

(54) **DEVICE AND METHOD FOR ARRANGEMENT ON A BODY COMPRISING AN ESSENTIALLY ROTATION-SYMMETRIC PORTION, AND METHOD FOR MOVING AND/OR MANIPULATION OF AN OBJECT USING THE DEVICE**

VORRICHTUNG UND VERFAHREN ZUR ANORDNUNG AN EINEM KÖRPER MIT EINEM IM WESENTLICHEN ROTATIONSSYMMETRISCHEN ABSCHNITT UND VERFAHREN ZUM BEWEGEN UND/ODER MANIPULIEREN EINES OBJEKTS UNTER VERWENDUNG DER VORRICHTUNG

DISPOSITIF ET PROCÉDÉ D'AGENCEMENT SUR UN CORPS COMPRENANT UNE PARTIE DE ROTATION ESSENTIELLEMENT SYMÉTRIQUE, ET PROCÉDÉ DE DÉPLACEMENT ET/OU DE MANIPULATION D'UN OBJET UTILISANT LE DISPOSITIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.10.2021 EP 21205583**

(43) Date of publication of application:
**04.09.2024 Bulletin 2024/36**

(73) Proprietor: **ETH Zurich**
**8092 Zürich (CH)**

(72) Inventors:
• **ZIMMERMANN, Yves Dominik**
**5430 Wettingen (CH)**
• **SONG, Jaeyong**
**8152 Glattpark (Opfikon) (CH)**

• **TEUSCHER, Florian**
**6344 Meierskappel (CH)**
• **HUWILER, Patrick**
**5643 Sins (CH)**
• **WOLF, Peter**
**5245 Habsburg (CH)**
• **RIENER, Robert**
**8092 Zürich (CH)**

(74) Representative: **Schulz Junghans**
**Patentanwälte PartGmbB**
**Großbeerenstraße 71**
**10963 Berlin (DE)**

(56) References cited:
**EP-A1- 3 868 521        WO-A1-2010/095619**
**IT-A1- VR20 120 081        US-A1- 2019 254 915**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 422 833 B1

**Description**

The present invention concerns a device and a method for arrangement on a body comprising an essentially rotation-symmetric portion, particularly for human-exoskeleton coupling, as well as a method for moving and/or manipulation of an object, particularly for human-exoskeleton coupling. Such a device having the features specified in the preamble of claim 1 is known from US 2019/254915 A1.

In many applications where constant physical interaction between a human limb and a robot is needed, the robot is designed with an exoskeleton structure, such that the robots and the humans' joints coincide.

Exoskeletons have the following advantages:

All joint degrees of freedom of the linked human limb can be controlled and/or observed fully, the risk of overextension and a perpendicular load on the human joints is mitigated due to the aligned joints of the robot and the workspace of the human and robot mostly coincide. Hence, the robot can cover a large fraction of the human range of motion, while the robot arm requires less space compared to an end-effector-based solution.

Hence, exoskeletons can be found in robot-assisted therapy (e.g. ArmeoPower, Hocoma, Switzerland; Harmony, BionicHarmonic, USA), teleoperation (e.g. ESA Exoskeleton, ESA, Netherlands), as an assistive device for impaired people (e.g. ReWalk, ReWalk, Germany) or gravity supporting device in the industry (e.g. Paexo, Ottobock, Germany; EksoVest, EksoBionics, USA; H-CEX, Hyundai, South Korea), and defense applications.

For these devices, it is often efficient for multiple people to share one device, as the device's price is quite high (e.g. robot-assisted therapy and teleoperation). For the functionality of an exoskeleton, the alignment accuracy of the exoskeleton joints with the human joints, the force transmission bandwidth, position constraint rigidity between both, and a large range of motion are vital.

The mechanical elements coupling the human arm to the robot (referred to as physical human-robot-interface pHRI) have a key role in defining the quality of the exoskeleton regarding these aspects.

There are the following challenges:

The exoskeleton joints need to be aligned to the human joints in the most accurate way possible, else undesired parasitic forces will occur. While most exoskeletons solve the adaptability to the varying length of limb segments well, the variation in limb diameter is not taken care of. With most pHRI designs in related work, a limb will be mounted to the pHRI with the same location of the limb surface closest to the robot. This causes the center of the limb to be located closer to the exoskeleton structure for a small diameter limb segment compared to a large diameter. Hence, the joint axes of the small diameter limb are not located at the same relative position to the robot as for the large diameter limb. For example, the upper arm diameter of a 5th percentile female is 70mm while the diameter of a 95th percentile male is 111 mm (NASA, 2020). Hence, mounting these arms to an exoskeleton with constant position of the circumference can lead to a difference of 20 mm in the positions of the arm center and with that a joint misalignment of at least 20 mm (inaccuracies in alignment of other dimensions add to the offset). Such a displacement can cause joint discomfort or pain due to emerging parasitic loads on the joint. To lower the effect of misalignment, passive compensation joints were proposed at the pHRI or in the kinematic chain of the exoskeleton. However, these passive degrees of freedom hamper the controllability and observability (without additional instrumentation) of the human and robot arms. Further, the passive degrees of freedom mechanisms known to us do not compensate for the misalignment due to different arm circumferences.

Further, most solutions out of related work solve this issue by additional cushioning for the small arm to avoid the offset. This solution requires additional material and work steps adding further cost for storage and labor. As adapting the cushioning to the user is inconvenient, this step is often neglected in daily use. Further, the additional cushioning alters the stiffness of the cuff system. Other solutions require manual adjustment of the pHRI, often involving tools to adapt for the changing limb diameter, which is similarly work-intensive as the additional cushioning.

Moreover, a sufficient and consistent stiffness of the pHRI system is essential to establish a high interaction force bandwidth and consistent control behavior. Further, sufficient stiffness is needed to prevent excessive misalignment between the human and robot joints during transmission of interaction forces. Excessive misalignment can cause undesired parasitic joint loads, the tension on the skin at the location of the pHRI as well as additional unintended contact points of the robot with the human arm. Additional contact points can lead to dangerous states and would distort the measurement of interaction forces at the intended contact points if such instrumentation is used.

A further challenge consists in the placement on the human limb as it has a big influence on the stiffness of the overall connection as well as the comfort. Simulations, experimental experience, and designs of recent related work for the upper limb indicate that the pHRI should support the human limb segments at the proximal and distal end. Thereby the highest rotation stiffness is achieved with comparably low contact forces. Keeping the contact forces low improves comfort. However, these contact locations might not be optimal to avoid collisions of the pHRI with components of the robot and/or the human body.

Additionally, the larger the footprint of a pHRI the smaller the range of motion feasible by the coupled human-robot system without collisions of the pHRI with the human body or the robot itself. Cuff systems that provide sufficient stiffness often implement a rigid shell. In most solutions, this rigid outer shell does not adapt to the diameter of the human limb.

Hence, the outer shell diameter is too large for users with a small arm diameter. Hence, the collision and the resulting reduction of the range of motion comes unnecessarily early. Users with a smaller limb diameter can also be expected to have shorter limb segments. Hence, the constant footprint of the outer shell will reduce the usable range of motion for a small person compared to a tall one. Mostly textile-based solutions for pHRI do not exhibit this issue. However, these soft pHRIs are not able to provide the required stiffness for all applications.

Last but not least, particularly the upper arm and the thigh contain muscles that exhibit a large change in cross-section during contraction. Constraining the limb with the pHRI in an area with prominent cross-section change, e.g., biceps brachii, could lead to high pressure increase on the arm during muscle contraction.

There is no pHRI or other attachment system for essentially rotation-symmetric bodies described in related work that features all following functions at the same time:

- Toolless adaption to different limb diameters without exchange of parts

- Adaption to different limb segment diameters while keeping the center of the limb automatically at the same location

- Adapting the outer shell (footprint) of the pHRI to the limb segment size

- Adaptions to different sizes can be performed a. without exchanging parts, b. without additional working steps to the main fastening action

- Stiff structure encompassing more than half of the arm circumference to allow for high bandwidth in interaction force control and low interaction force caused misalignment

- Minimal constraint to contraction of muscles (e.g. musculus biceps brachii)

- Open structure when not attached to allow placing the limb in the radial direction in the pHRI system (e.g. patients with spasticity do not need to stick the limb through a closed loop and also access with shoes is possible for lower limb applications)

Based on this, it is subject of the present invention to provide a device and methods that are improved with respect to the challenges discussed above and particularly configured for arrangement on a body comprising an essentially rotation-symmetric portion, such that independently of the radial extent of the rotation-symmetric portion, the rotation-symmetric portion of the body is and remains centered relative to the device.

This object is solved by the device with the features of claim 1 as well as by the methods of claims 13 and 15.

Advantageous embodiments of the device are subject-matter of claims 2 to 12.

The present invention discloses a device for arrangement on a body comprising an essentially rotation-symmetric portion, wherein the device comprises at least one interface, the interface comprising:

- two clamps with at least one pivot axis, each clamp comprising a clamp tip, the respective clamp tip being arranged opposite of the at least one pivot axis and the pivot axis being arranged fixed in relation to a base structure comprised by the device, wherein the clamps are configured to be pivoted around the at least one pivot axis between a first position and a second position, respectively, wherein in the first position, the clamp tips are spaced further from each other than in the second position,

- a support structure arranged between the clamps, the support structure being configured to be arranged on and/or to support the rotation-symmetric portion of the body and

- a support rope system comprising at least one support rope, with at least one support rope of the rope system being connected to a tensioning element fixed with respect to the base structure, the connection of the tensioning element and the at least one support rope being spaced from the at least one pivot axis and arranged on the opposite side of the clamp with respect to the support structure, the support rope further extending across a redirection means provided by each of the clamps, the redirection means having a defined distance with regard to the at least one pivot axis of the respective clamp, and extending towards the support structure, wherein the at least one support rope is connected to or guided by the support structure,

such that pivoting the clamps towards the second position causes an extension of a first rope section between the tensioning element and the redirection means of the respective clamp, a shortening of a second rope section between the redirection means and the support structure as well as a movement of the support structure towards the clamp tips, such that independently of a radial extent of the rotation-symmetric portion of the body arranged on the support structure, a central point of a cross-section of the rotation-symmetric portion of the body has an essentially constant distance to the base structure.

The body comprising an essentially rotation-symmetric portion may for example be a limb, particularly a human limb, such that the device may be used to center at least a portion of a human limb relative to the base structure, independently of the diameter of the limb. As such, the device may particularly find applications for human-exoskeleton coupling, wherein the device may be used to optimally fixate a human limb relative to an external exoskeleton, which may be connected to the base structure, resulting in improved force and torque transmission between a user attaching the device and the exoskeleton, essentially independently of the body shape of the user. This is particularly advantageous to minimize costs, as the device is not customized for one particular body shape but may be adapted according to the body shape of the user, within a broad range of body shapes. The device may also be used as a medical device, for example for surgeries on limbs that require a centering of the limb with respect to the base structure and an optional external structure connected to the base structure. Other applications may consist in radiation therapy or x-ray examinations of limbs, which also require a precise positioning of the limb with respect to the base structure and an optional external structure connected to the base structure. The device may also find alternative uses, for example as a robotic gripper if a constant center grasp is desired (e.g. to center grasped objects at a certain location for visual inspection) or any other application where bodies or objects comprising an approximately rotation-symmetric portion have to be fixed such that their central point of the cross-section of the rotation-symmetric portion remains at a constant position for all diameters of the portion. Such applications may for example be found in: manufacturing processes (e.g. laser engraving of tubes, inspection), robot-assisted or conventional surgery on limbs, radiation therapy, x-ray examinations, or body-powered prosthetics. The essentially rotation-symmetric portion of the body may have a rounded cross-section but the cross-section may also be a polygon or another shape that may be approximated as rotation-symmetric. The body comprising the essentially rotation-symmetric portion may itself be essentially rotation-symmetric but it may also deviate from rotation symmetry outside the rotation-symmetric portion. Of course, the body may also comprise two or more rotation-symmetric portions.

According to the invention, at least one support rope of the rope system is connected to a tensioning element fixed with respect to the base structure, the connection of the tensioning element and the at least one support rope being spaced from the at least one pivot axis and arranged on the opposite side of the clamp with respect to the support structure. The formulation 'connected to a tensioning element fixed with respect to the base structure' in this context may be understood such that the support rope is attached to the tensioning element, for example by means of adhesive, a knot, a clamp, a lock and the like. However, 'connected to a tensioning element fixed with respect to the base structure', may also be understood such that the support rope is attached to a structure that is not fixed with respect to the base structure, for example to at least one of the two clamps that are configured to pivot relative to the base structure, but that the support rope is guided by the tensioning element, for example by means of a loop of the support rope around the tensioning element. As such, the tensioning element ensures that, if the clamps are moved towards the second position, the first rope section between the tensioning element and the redirection point of the respective clamp is extended and that the second rope section between the redirection point and the support structure is shortened, such that the support structure moves towards the clamp tips.

The support rope system according to the invention may comprise just a single support rope, wherein the support rope is guided such by the support structure between the two ends of the single support rope, that pivoting of the clamps towards the second position causes a movement of the support structure towards the clamp tips. To this end, the support rope may for example be interwoven, threaded or glued with the support structure. The support system may also comprise more than one support rope, for example two support ropes, wherein each of the two support ropes may extend from a respective tensioning element over a respective redirection means to one of two sides of the support structure. In this case, each of the two support ropes may be connected to one of the two ends of the support structure, for example by an adhesive, a knot, a clamp, a lock and the like, such that the support structure is supported by the two support ropes. Once the clamps are pivoted towards the second position, this configuration likewise results in a movement of the support structure towards the clamp tips, as proposed by the invention. The support rope system may also comprise more than two support ropes, particularly wherein the support ropes extend parallel to each other with respect to an axis perpendicular to the at least one pivot axis of the clamps, such that forces acting on the ropes are advantageously distributed among parallel support ropes. However, multiple support ropes may also be used in such a way that individual support ropes cross or touch each other, or that are interconnected, for example by knots, loops, adhesive and the like. The at least one support rope may include an extensible element such that the total length of the support rope system may not be constant. As such, the position of the clamps and the support structure may vary under a changing total length of the support rope in response to a variation of the radial extent of the rotation-symmetric portion of the body. This may for example be advantageous if the device is used to be arranged on and/or to support a human limb, as the human limb may vary its radial extent for example due to muscle contractions.

The tensioning element according to the invention is spaced from the at least one pivot axis and arranged on the opposite side of the clamp with respect to the support structure. The 'opposite side of the clamp' defined here refers to the situation in which the rotation-symmetric portion of the body is arranged on and/or supported by the support structure arranged between the clamps, such that the opposite side describes the one of the two sides of the clamps that is not facing the support structure, but the base structure.

The support structure may comprise a cushioning, which is particularly advantageous in terms of wearing comfort, in case the device is used for arranging it on and/or supporting a human limb.

According to an embodiment of the present invention, the support rope may be guided via a respective tensioning element to the respective redirection means, the corresponding tensioning element being fixed in relation to the base structure.

According to an embodiment of the present invention, a rope end portion of the support rope may be fixed at a corresponding clamp. Particularly, the rope end portion of the support rope may be fixed at a corresponding clamp and guided via a respective tensioning element to the respective redirection means, the corresponding tensioning element being fixed in relation to the base structure. In this configuration, pivoting the clamps towards the second position does not just cause an extension of the first rope section between the tensioning element and the redirection means, but also an additional extension of the rope section between the respective clamp and the respective tensioning element. This additional extension in turn causes a stronger shortening of the second rope portion between the redirection point and the support structure, such that the movement of the support structure towards the clamp tips is advantageously facilitated.

According to an embodiment of the present invention, the redirection means may comprise a respective through hole of each clamp. In this embodiment, the at least one support rope is redirected and guided towards the support structure via a respective trough hole of each clamp. As an alternative redirection means, the at least one support rope may also be guided over an outside of the respective clamp, particularly wherein the outside of the respective clamp comprises indentations to guide the at least one support rope.

According to an embodiment of the present invention, each clamp may be connected to a spring, the spring being configured to exert a force on the respective clamp directed towards the first position. In this embodiment, the clamps are advantageously configured such that in absence of forces acting on the clamps, the clamps are pre-stressed by the spring so that they remain in the first position characterized by a further spacing of the clamp tips to each other than in the second position, such that the support structure may be comfortably arranged on the rotation-symmetric portion of the body, without a possibly disturbing movement of the clamps towards the second position. Instead of a spring, also other means exerting a force on the respective clamp directed towards the first position may be used, for example elastic straps or bands and the like.

According to an embodiment of the present invention, the device may further comprise a tightening element configured to move the clamps towards the second position. The tightening element may for example be formed by a strap or band extending from one clamp tip and be configured to be guided through an eyelet arranged on the second clamp tip, such that by guiding the strap or band through the eyelet and pulling on it, for example manually, the clamps may be moved towards the second position. The tightening element may also comprise a ratchet or a clamp. The tightening element may also comprise an actuator, such that the movement of the clamps towards the second position may be automatized. The tightening element may further be configured to exert a radial force on the rotation-symmetric portion of the body arranged on the support structure, wherein the radial force is directed towards the central point of the cross-section of the rotation-symmetric portion of the body.

According to an embodiment of the present invention, the device may further comprise a fixing system configured to fix the clamps at the second position or between the first and the second position. Since the movement of the clamps is mechanically coupled to the movement of the support structure via the support rope system, fixing the clamps at the second position or between the first and the second position at the same time causes a fixing of the support structure, once it is arranged on and/or supporting the rotation-symmetric portion of the body. Preferably, the fixing system is reclosable, such that it can be opened and closed repeatedly. To this end, the fixing system may for example comprise a mechanical or electrical lock or a hook and the like.

According to a variant of the present invention, the tightening element and the fixing system may be combined by means of a hook and loop fastener comprising a strap or band, which is configured to move the clamps towards the second position and fixate the clamps at the second position or between the first and the second position.

According to an embodiment of the present invention, the device may further comprise a force- and/or torque sensor, the force- and/or torque sensor being configured to measure a force and/or a torque exerted on and/or by the rotation-symmetric portion of the body arranged on the support structure. The force- and/or torque sensor may be particularly useful in case the device is used as a human-exoskeleton interface, wherein a human limb is arranged on and/or supported by the support structure and wherein the base structure is connected to an external exoskeleton. In this case, the force- and/or torque sensor may determine and indicate the forces and/or torques exerted on and/or by the human limb, for example if the human limb is moving the exoskeleton through muscle power and/or if the exoskeleton supports movements of the human limb. To establish a connection between the base structure and the external exoskeleton, the base structure may further comprise an adapter.

According to an embodiment of the present invention, the device may comprise at least two interfaces, particularly two interfaces according to the invention, wherein the interfaces are connected by a connection structure.

To this end, the body preferably comprises at least two essentially rotation-symmetric portions, wherein each rotation-symmetric portion is attached to a corresponding interface of the device. This embodiment may be particularly advantageous to improve the transmission of forces and/or torques if the device is used as a human-exoskeleton interface, wherein a human limb is arranged on and/or supported by the support structure and wherein the base structure is connected to an external exoskeleton: By using more than one interface, the coupling between the human limb and the external exoskeleton may be improved, for example by arranging the interfaces along an axis defined by the limb. This axis may for example extend essentially parallel to the at least one pivot axis of the two clamps, along one spatial direction. However, the interfaces may also be arranged on at least two limbs that are connected by a hinge joint, such that the connection structure may also comprise angles or hinges.

According to an embodiment of the present invention, the connection structure may comprise spacing elements configured to tune and/or fixate a displacement between the interfaces along an axis. The axis may for example extend essentially parallel to the at least one pivot axis of the two clamps, such that the displacement may be tuned and/or fixate along one axis along one spatial direction. However, the spacing elements may also be part of a connection structure comprising angles or hinges, such that the displacement between interfaces may be tuned and/or fixated along multiple axes extending along multiple spatial directions.

According to an embodiment of the present invention, each clamp may be provided with a gear, wherein both gears engage with each other, such that when one of the clamps is pivoted along one rotation direction, the rotating gears cause the other clamp to pivot along an opposite rotation direction. This embodiment provides an easy access to and stability of the device, wherein the clamps may be opened and closed with just one hand.

According to an embodiment of the present invention, particularly in the second position, a ratio between the length of the first rope section and the length of the second rope section, particularly a ratio between the length of the first rope section and the length of a rope section extending from the redirection means to the center of the support structure may be larger than 0.5.

Another aspect of the invention concerns a method for arranging the device according to the invention or one of its embodiments on an essentially rotation-symmetric portion of a body, particularly for arranging a rotation-symmetric portion of a body on an external structure, for example an exoskeleton. The method comprises at least the following steps:

i) arranging the rotation-symmetric portion of the body between the clamps and

ii) moving the clamps towards the second position, such that the support structure moves towards the central point of the cross-section of the rotation-symmetric portion of the body, such that the support structure at least in sections adapts to the shape of the rotation-symmetric portion, and that a contact area between the rotation-symmetric portion and the support structure is maximized.

Preferably, prior to step i), the clamps are moved to the first position, such that the support structure moves away from the clamp tips towards the base structure, such that the support structure can be comfortably arranged on and/or support the rotation-symmetric portion of the body. The clamps may for example be moved manually to the first position, or they may be held in the first position by said optional springs.

To execute step ii), said optional tightening element may be advantageously used. After step ii), the rotation-symmetric portion of the body may be in contact with the support structure or with the support structure and the tightening element along the entire circumference within a section along central point of the cross-section of the rotation-symmetric portion of the body. As such, this method ensures a strong fixation of the body to the device and optionally to an external structure, for example an exoskeleton, while keeping the central point of the cross-section of the rotation-symmetric portion of the body at a constant distance to the base structure, independently of the radial extent of the rotation-symmetric portion. Another advantage of this method consists in that due to the coupling of the movement of the clamps and the support structure via the support rope, no additional tools are needed to adapt the device to the radial extent of the rotation-symmetric portion of the body, as the adaption happens by moving the clamps towards the second position.

According to a variant of the method for arranging the device according to the invention or one of its embodiments on an essentially rotation-symmetric portion of a body, after step ii), the clamps may be fixed in a position at or between the first and the second position, particularly by using said optional locking system.

Yet another aspect of the invention relates to a method for moving and/or manipulation of an object using the device according to the invention or one of its embodiments, the method comprising the following steps:

i) arranging a rotation-symmetric portion of a body between the clamps, the rotation-symmetric portion being or being part of a locomotive system,

ii) moving the clamps towards the second position, such that the support structure moves towards a central point of a cross-section of the rotation-symmetric portion, such that the support structure at least in sections adapts to the shape of the rotation-symmetric portion, and that a contact area between the rotation-symmetric portion and the support structure is maximized,

iii) fixing the clamps in a position between the first and the second position or at the second position,

iv) establishing a mechanical connection between the base structure and an object to be moved or manipulated and

v) exerting a force from the device via the base structure to the object in order to move and/ or manipulate the object.

The 'locomotive system' introduced here refers to a system that is configured to move due to intrinsic forces of the locomotive system or external forces acting on the locomotive system. As such, the locomotive system may for example comprise a human limb or a robotic unit.

Preferably, when the support structure is arranged on and/or supporting the rotation-symmetric portion of the body, the support structure or the support structure and the tightening element may be in contact with more than half of a circumference of the rotation-symmetric portion. As such, the device may support the body via the rotation-symmetric portion along three spatial directions.

The device according to the invention permits to center rotation-symmetric bodies of a range of predetermined lateral diameters between $D_{min}$ and $D_{max}$, such that independently of their diameter, the center of the cross-section of the rotation-symmetric portion of the body has the same distance to the base structure. For example, $D_{min}$ may be 70 mm and $D_{max}$ may be 111 mm. These values particularly refer to exemplary minimal and maximal lateral diameters of human limbs. Depending on the diameter of the essentially rotation-symmetric portion of the body, the minimal and maximal lateral diameter may also be lower or larger than the values stated here.

Preferably, steel is used as material for the clamp axes and the redirecting elements means. The width adjusting elements may be for example built with CFRP tubes and the clamps may for example comprise aluminum. The springs may for example be realized by spring steel bands acting between the clamps and the base structure. As support ropes, cords with a small minimum bend radius and a high stiffness are advantageous. The lower support may be a 2 mm plate from PA12. A breathable synthetic cushioning may be placed between the rotation-symmetric portion of the body and the support structure, particularly in case the device is arranged on a human limb.

Exemplary embodiments are described below in conjunction with the Figures. The Figures are appended to the claims and are accompanied by text explaining individual features of the shown embodiments and aspects of the present invention. Each individual feature shown in the Figures and/or mentioned in the text of the Figures may be incorporated (also in an isolated fashion) into a claim relating to the device and the methods according to the present invention.

Fig. 1          shows a side view of an interface of the device.

Fig. 2          shows a side view of an interface of the device, wherein a rotation-symmetric portion of a body is arranged on and supported by the support structure.

Figs. 3 and 4   show perspective views of an interface of the device, wherein the clamps are in the first position (Fig. 3a) and in the second position (Fig. 3b).

Fig. 5          shows a side view of an interface of the device, wherein each of the two clamps comprises a spring and a gear, the two gears engaging with each other.

Fig. 6          corresponds to a close up on the gears shown in Fig. 4, wherein the base structure extending perpendicular to the drawing plane is additionally indicated.

Fig. 7          shows an exploded perspective view of an interface and the base structure of the device.

Fig. 8          shows a perspective view of two interfaces connected by a connection structure.

Fig. 9          corresponds to Fig. 1, wherein multiple geometrical parameters of the interface are indicated.

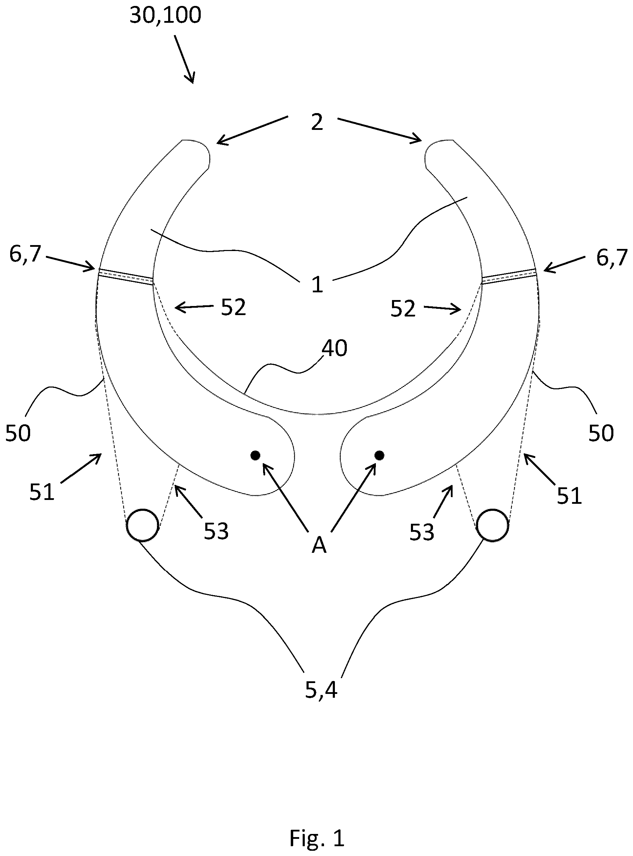

Fig. 1 shows an embodiment of an interface 30 of the device 100 according to the invention. In this embodiment, the interface 30 comprises two clamps 1 that each comprise a pivot axis A. Each pivot axis A is further arranged opposite of a clamp tip 2 comprised by each clamp 1. The respective pivot axis A is fixed with respect to a respective tensioning element 5 connected to a base structure 4 of the device 100 and each clamp 1 is configured to pivot around its pivot axis A, such that the clamps 1 may pivot with respect to the base structure 4.

The interface 30 shown in Fig. 1 further comprises a support structure 40 arranged between the clamps 1.

The interface 30 depicted in Fig. 1 further comprises a support rope system. In the embodiment shown here, the support rope system comprises a single support rope 50 that extends between respective outsides of each clamp 1, the outsides facing away from the support structure 40. To this end, the support rope 50 is fixedly attached to the respective outside of each clamp 1 at two rope end portions 53 of the support rope 50, for example by adhesive, a knot, a clamp or the like. In this embodiment, the two rope end portions 53 protrude from the outside of each clamp 1 towards the respective tensioning element 5 of each clamp 1 guiding the respective rope end portion 53, for example by means of a loop of the rope portions around the tensioning elements 5. From the respective tensioning element 5, a first rope section 51 extends towards a respective redirection means 6. In the embodiment shown here, the redirection means 6 is realized as a through hole 7 of each clamp 1, which allows to redirect the support rope 50 from the outside of each clamp 1 to an inside of each clamp 1 facing the support structure 40. From the redirection means 6, a second rope section 52 of the support rope 50 extends towards the support structure 40, where the support rope 50 is connected to or guided by the support structure 40.

According to the invention, the tensioning element 5 is fixed in relation to the base structure 4. In this way it is achieved that pivoting the clamps 1 around their pivot axes A such that the spacing between the clamp tips 2 decreases causes an extension of the first rope section 51 and the rope end portion 53 between the outside of the clamps 1 and the tensioning element 5, as well as a shortening of the second rope section 52, such that the support structure 40 is moved towards the clamp tips 2.

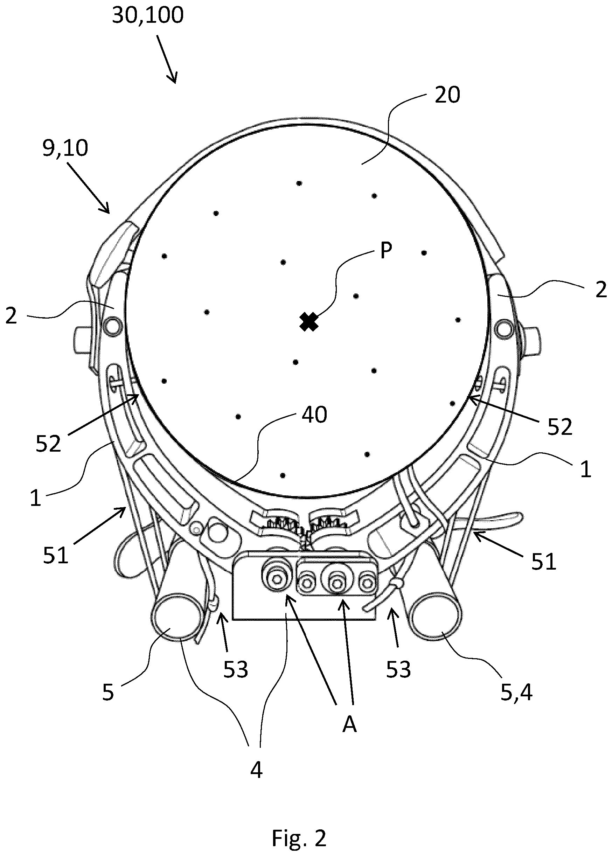

Fig. 2 shows an embodiment of an interface 30 of the device 100 according to the invention, wherein the support structure 40 is arranged on and supporting a rotation-symmetric portion of a body 20. Fig. 2 further shows the base structure 4 of the device 100. While the clamps 1 are configured to move relative to the support structure 40 by pivoting around their respective pivot axis A, the pivot axes A and the tensioning elements 5 remain fixed with respect to the base structure 4. This configuration ensures that pivoting the clamps 1 around their pivot axes A such that the distance between the clamp tips decreases, causes an extension of the first rope section 51 and the rope end portion 53 of the support rope 50 between the outside of the clamps 1 and the tensioning element, as well as a shortening of the second rope section 52, such that the support structure 40 is moved towards the clamp tips 2. As the support structure 40 moves towards the clamp tips 2, the support structure 40 adapts to the shape of the rotation-symmetric portion of the body 20. According to the invention, the distance between a central point P of the essentially rotation-symmetric portion of the body 20 arranged on the support structure 40 remains constant, independently of the radial extent of the rotation-symmetric portion. The central point P may be comprised by a symmetry axis of the rotation-symmetric portion of the body 20. In case of deviations from a perfect rotation symmetry, the central point P may describe a center of the cross-section area of the body 20, particularly portions of the body 20.

The device 100 may further comprise a tightening element 9 configured to move the clamps 1 towards the second position 12. In the embodiment shown in Fig. 2, the tightening element 9 is realized by a strap extending from one clamp tip 2 to towards the other clamp tip 2, where the strap may be pulled through an eyelet so as to move the clamps 1 towards each other. The present embodiment further provides a fixing system 10 configured to fix the clamps 1 in a position at or between the first and the second position 12. To this end, the strap shown here represents a hook and loop fastener guided through the eyelet, advantageously combining the tightening element 9 and the fixing system 10.

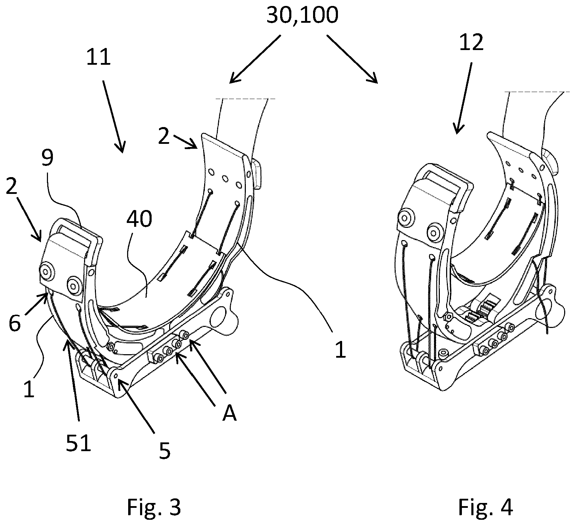

Figs. 3 and 4 show perspective views of an interface 30 of the device 100, wherein the clamps 1 are in a first position 11 (Fig. 3) and in a second position 12 (Fig. 4). According to the invention, the clamps 1 may be moved between the first position 11 and the second position 12 by pivoting the clamps 1 around their pivot axis A or pivot axes A.

According to the invention, pivoting the clamps 1 towards the second position 12 causes an extension of a first rope section 51 between the tensioning element 5 and the redirection means 6 of the respective clamp 1, a shortening of a second rope section 52 between the redirection means 6 and the support structure 40 as well as a movement of the support structure 40 towards the clamp tips 2.

Preferably, to arrange the support structure 40 on and/or to support the rotation-symmetric portion of the body 20 (not shown here), the clamps 1 are first moved towards the first position 11, such that the clamp tips 2 are spaced further from each other than in the second position 12, such that the support structure 40 may be easily arranged with respect to the rotation-symmetric portion of the body 20. Subsequently, the clamps 1 may be moved towards the second position 12, for example via the tightening element 9, until the support structure 40 adapts to the rotation-symmetric portion of the body 20, particularly such that the support structure 40 at least in sections adapts to the shape of the rotation-symmetric portion of the body 20 and that a contact area between the rotation-symmetric portion of the body 20 and the support structure 40 is maximized, cf. also Fig. 2. The clamps 1 may subsequently be fixed at the second position 12 or at a position between the first position 11 and the second position 12.

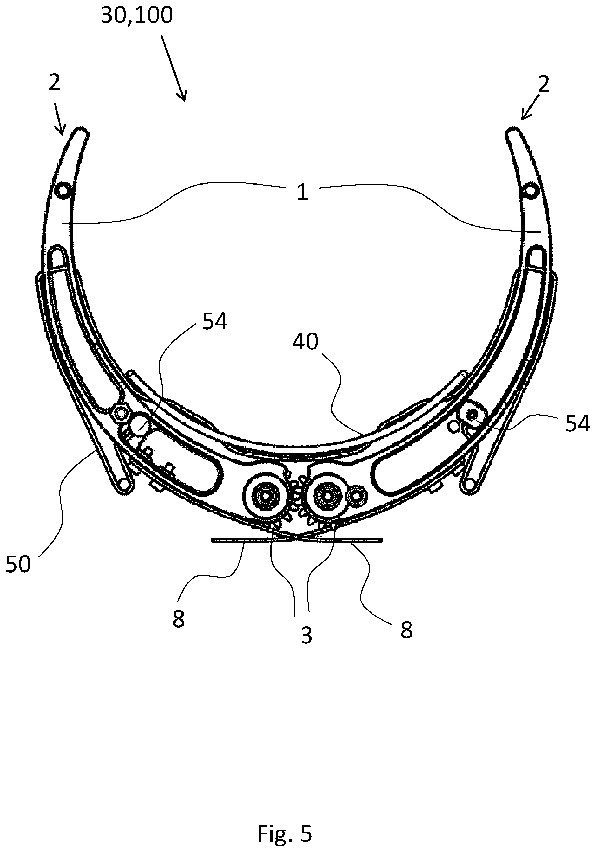

Fig. 5 shows another embodiment of the device 100 according to the invention with a side view of an interface 30 of the device 100, wherein each of the two clamps 1 comprises a gear 3, the two gears 3 engaging with each other. The two engaging gears 3 advantageously ensure that when one of the clamps 1 is pivoted along one rotation direction, the gears 3 cause the other clamp 1 to pivot along an opposite rotation direction. This facilitates the handling of the clamps 1, such that the device 100 may be used with just one hand. Moreover, the gears 3 contribute to an enhanced stability and functionality of the device 100, as the antagonistic pivoting of the two clamps 1 prevents a translation of both clamp tips 2 into the same direction with respect to the base structure 4. Further, the gears facilitate an opening and closing of the clamps 1, particularly in combination with the tightening element 9 and the fixing system 10.

The embodiment depicted here further includes a spring 8 connected to the outside of each clamp 1. The spring 8 is preferably configured to exert a force on the respective clamp 1 directed away from the other clamp. This advantageously enables to keep the clamp tips 2 in an open position such that the device 100, particularly the support structure 40, may be arranged on the rotation-symmetric portion of the body 20 (not shown here) before the clamps 1 are moved towards each other against a prestress of the springs 8.

The embodiment shown in Fig. 5 further shows a rope system comprising a single support rope 50 that is coiled on windings 54 comprised by the clamps 1. By rotating the windings 54, the support rope 50 may be partially coiled up and down, varying an effective length of the support rope 50. In this way, a maximum displacement of the clamps 1 may be tuned.

The present embodiment further provides a support rope system with a support rope 50 that is threaded through the support structure 40 such that by moving the clamps 1 towards each other, the support rope 50 moves the support structure 40 towards the clamp tips 2.

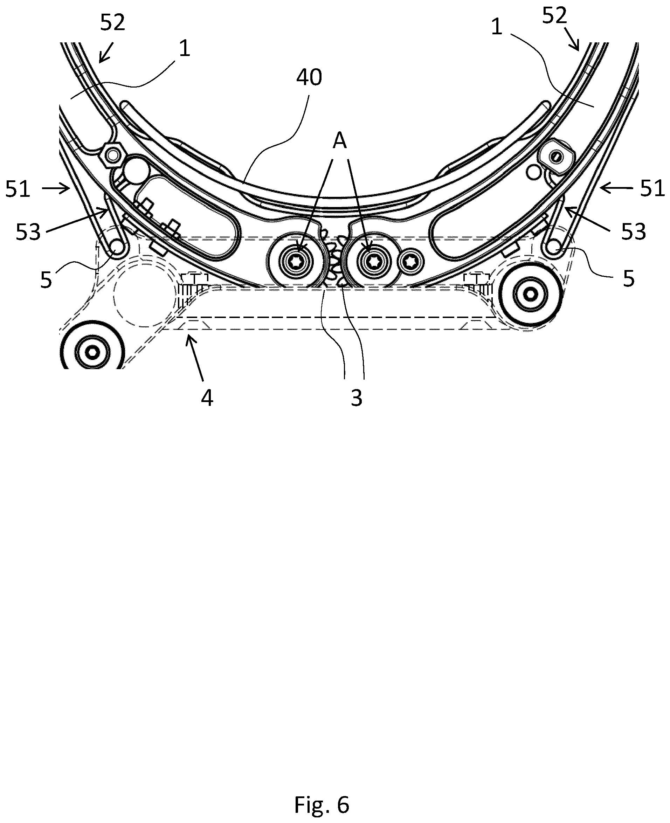

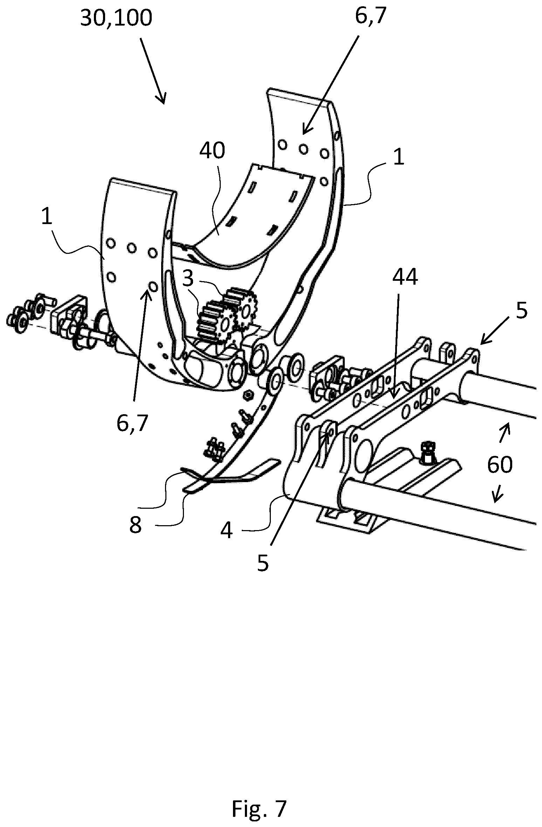

Fig. 6 corresponds to a close up highlighting the gears 3 of Fig. 7, wherein the base structure 4 extending perpendicular to the drawing plane is additionally indicated as dashed lines. While the clamps 1 may be moved relative to the base structure 4 by pivoting the clamps 1 around their respective pivot axis A, the tensioning elements 5 and the pivot axes A remain fixed with respect to the base structure 4. In this way it is achieved that pivoting the clamps 1 around their pivot axes A towards each other causes an extension of the first rope section 51 and the rope end portion 53 between the outside of the clamps 1 and the tensioning element 5, as well as a shortening of the second rope section 52, such that the support structure 40 is moved upwards, away from the base structure 4. In the embodiment shown here, the respective gears 3 and pivot axes A of each clamp 1 are coaxial.

Fig. 7 shows an embodiment of the device 100 according to the invention, with an exploded perspective view of an interface 30 of the device 100, particularly the support structure 40 as well as the clamps 1 comprising through holes 7 forming the redirection means 6, gears 3 and springs 8. The clamps 1, gears 3 and springs 8 are connected to each other by a plurality of screws, washers and nuts. The base structure 4 comprises the tensioning elements 5 and a recess 44 that is configured to receive the clamps 1 and the gears 3. The device 100 here, particularly the base structure 4, further comprises a connection structure 60. The connection structure 60 may be used to couple the interface 30 arranged on the base structure 4 to an external device, for example an exoskeleton, such that the device 100 may be used for human-exoskeleton coupling.

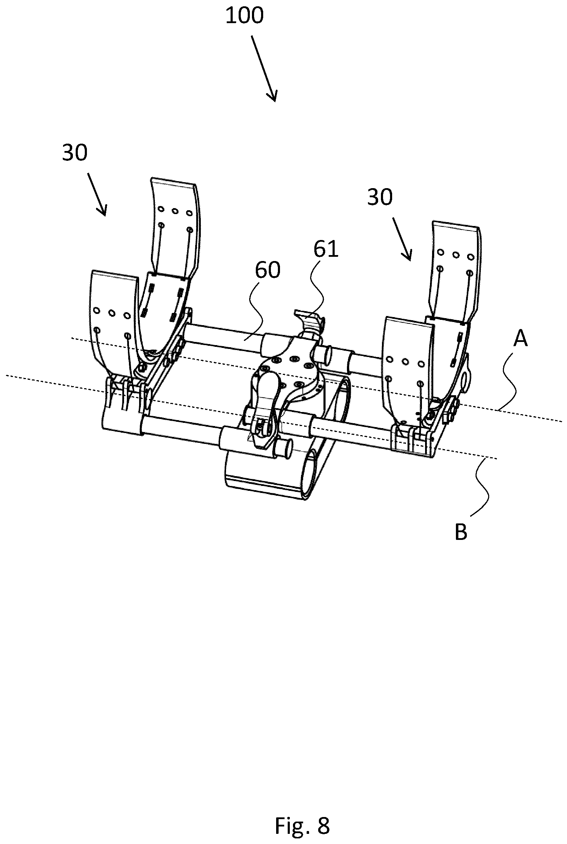

Fig. 8 shows an embodiment of the device 100 according to the invention, comprising two interfaces 30 that are connected via the connection structure 60. The connection structure 60 further comprises spacing elements 61 configured to tune and/or fixate a displacement between the two interfaces 30, particularly along an axis B defined by the connection structure 60. In the embodiment shown here, this axis B is essentially parallel to the pivot axes A of the clamps 1. This embodiment is particularly configured to arrange the device 100 on a human limb, wherein the human limb preferably extends parallel to the axis B defined by the connection structure 60.

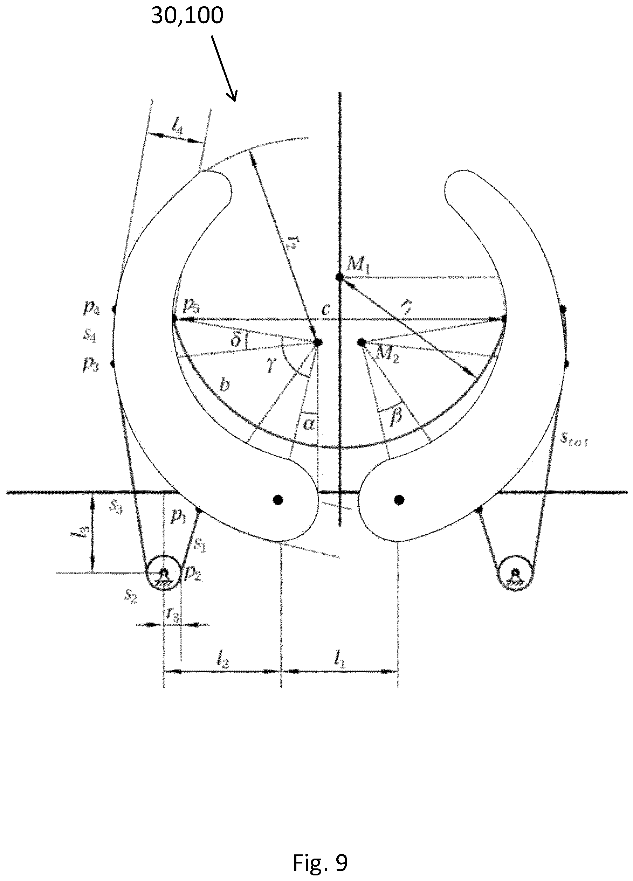

Fig. 9 corresponds to Fig. 1, wherein various geometrical parameters are additionally indicated. For the relation between the various parameters, it holds:

$$h_{M1} = \cos(\alpha + \gamma)\,(l_4 - r_2) - \cos(\alpha)\,(d - r_2) + \left[r_1^2 - \left(\frac{c}{2}\right)^2\right]^{\frac{1}{2}},$$

$$c = 2\sin(\alpha + \gamma)\,(l_4 - r_2) - l_1 - 2\sin(\alpha)\,(d - r_2),$$

$$b = s_{tot} - 2s_1 - 2s_2 - 2s_3 - 2s_4 - 2s_5,$$

$$s_1 = \{[r_3 - l_2 + r_2\sin(\alpha + \beta) + \sin(\alpha)(d - r_2)]^2 + [r_2\cos(\alpha + \beta) - l_3 + \cos(\alpha)\,(d - r_2)]^2\}^{1/2},$$

$$s_2 = \pi r_3,$$

$$s_3 = \{[r_2\cos(\alpha - \delta + \gamma) - l_3 + \cos(\alpha)\,(d - r_2)]^2 + [l_2 + r_3 - r_2\sin(\alpha - \delta + \gamma) - \sin(\alpha)\,(d - r_2)]^2\}^{1/2},$$

$$s_4 = \delta r_1,$$

$$s_5 = l_4$$

and

$$\delta = \gamma - \arccos\left\{\frac{r_2}{[(l_2+r_3-\sin(\alpha)(d-r_2))^2+(l_3-\cos(\alpha)(d-r_2))^2]^{1/2}}\right\}.$$

Additionally, $r_1$ can be calculated numerically from the length L of the chord between the point $p_5$ and its mirror point with respect to the vertical symmetry axis shown in Fig. 9, wherein L = $c$ in case the support structure is arranged horizontally with respect to the drawing plane, and wherein L = $b$ in case the support structure 40 follows the shape of a circular arc:

$$r_1 \sin\left(\frac{b}{2r_1}\right) = c/2$$

For example, the following example parameters give rise to a range of radii 40 mm < $r_1$ < 60.5 mm of the rotation-symmetric portion of the body 20 that may be arranged on the support structure 40 while keeping the distance between the center of the cross-section of the rotation-symmetric portion of the body 20 constant for all radii within the abovementioned range:

$r_1$ = 72.27 mm, $r_3$ = 2 mm, $l_1$ = 16 mm, $l_2$ = 37.66 mm, $l_3$ = -3 mm, $l_4$ = 6.5 mm,
$h_{M1}$ = 72.5 mm, $l_1$ = 16 mm, d = 7 mm, $\delta$ = 87.5°, $\beta$ = 36°.

**List of refence signs:**

| | |
|---|---|
| Clamps | 1 |
| Clamp tips | 2 |
| Gear | 3 |
| Base structure | 4 |
| Tensioning element | 5 |
| Redirection means | 6 |
| Through hole | 7 |
| Spring | 8 |
| Tightening element | 9 |
| Fixing system | 10 |
| First position | 11 |
| Second position | 12 |
| Body | 20 |
| Interface | 30 |
| Support structure | 40 |
| Recess | 44 |
| Support rope | 50 |
| First rope section | 51 |
| Second rope section | 52 |
| Rope end portion | 53 |
| Windings | 54 |
| Connection structure | 60 |
| Spacing elements | 61 |
| Device | 100 |
| Pivot axis | A |

(continued)

| Axis | B |
|---|---|
| Central point | P |

**Claims**

1. A device (100) for arrangement on a body (20) comprising an essentially rotation-symmetric portion, wherein the device (100) comprises at least one interface (30), the interface (30) comprising:

   - two clamps (1) with at least one pivot axis (A), each clamp (1) comprising a clamp tip (2), the respective clamp tip (2) being arranged opposite of the at least one pivot axis (A) and the pivot axis (A) being arranged fixed in relation to a base structure (4) comprised by the device (100), wherein the clamps (1) are configured to be pivoted around the at least one pivot axis (A) between a first position (11) and a second position (12), respectively, wherein in the first position (11), the clamp tips (2) are spaced further from each other than in the second position (12),
   - a support structure (40) arranged between the clamps (1), the support structure (40) being configured to be arranged on and/or to support the rotation-symmetric portion of the body (20), **characterised in that** the device further comprises
   - a support rope system comprising at least one support rope (50), with at least one support rope (50) of the rope system being connected to a tensioning element (5) fixed with respect to the base structure (4), the connection of the tensioning element (5) and the at least one support rope (50) being spaced from the at least one pivot axis (A) and arranged on the opposite side of the clamp (1) with respect to the support structure (40), the support rope (50) further extending across a redirection means (6) provided by each of the clamps (1), the redirection means (6) having a defined distance with regard to the at least one pivot axis (A) of the respective clamp (1), and extending towards the support structure (40), wherein the at least one support rope (50) is connected to or guided by the support structure (40),

   such that pivoting the clamps (1) towards the second position (12) causes an extension of a first rope section (51) between the tensioning element (5) and the redirection means (6) of the respective clamp (1), a shortening of a second rope section (52) between the redirection means (6) and the support structure (40) as well as a movement of the support structure (40) towards the clamp tips (2), such that independently of a radial extent of the rotation-symmetric portion of the body (20) arranged on the support structure (40), a central point (P) of a cross-section of the rotation-symmetric portion of the body (20) has an essentially constant distance to the base structure (4).

2. The device (100) for arrangement on a body (20) according to claim 1, wherein the support rope (50) is guided via a respective tensioning element (5) to the respective redirection means (6).

3. The device (100) for arrangement on a body (20) according to claim 2, wherein a rope end portion (53) of the support rope (50) is fixed at a corresponding clamp (1).

4. The device (100) for arrangement on a body (20) according to one of the preceding claims, wherein the redirection means (6) comprises a respective through hole (7) of each clamp (1).

5. The device (100) for arrangement on a body (20) according to one of the preceding claims, wherein each clamp (1) is connected to a spring (8), the spring (8) being configured to exert a force on the respective clamp (1) directed towards the first position (11).

6. The device (100) for arrangement on a body (20) according to one of the preceding claims, further comprising a tightening element (9) configured to move the clamps (1) towards the second position (12).

7. The device (100) for arrangement on a body (20) according to one of the preceding claims, further comprising a fixing system (10) configured to fix the clamps (1) at the second position (12) or between the first and the second position (11,12).

8. The device (100) for arrangement on a body (20) according to claim 7, further comprising a force- and/or torque sensor, the force- and/or torque sensor being configured to measure a force and/or a torque exerted on and/or by the body (20) arranged on the support structure (40).

9. The device (100) for arrangement on a body (20) according to one of the preceding claims, comprising at least two interfaces (30), wherein the interfaces (30) are connected by a connection structure (60).

10. The device (100) for arrangement on a body (20) according to claim 9, wherein the connection structure (60) comprises spacing elements (61) configured to tune and/or fixate a displacement between the interfaces (30) along an axis (B).

11. The device (100) for arrangement on a body (20) according to one of the preceding claims, wherein each clamp (1) is provided with a gear (3), wherein both gears (3) engage with each other, such that when one of the clamps (1) is pivoted along one rotation direction, the rotating gears (3) cause the other clamp (1) to pivot along an opposite rotation direction.

12. The device (100) for arrangement on a body (20) according to one of the preceding claims, wherein in the second position (12), a ratio between the length of the first rope section (51) and the length of the second rope section (52), particularly a ratio between the length of the first rope section (51) and the length of a rope section extending from the redirection means (6) to the center of the support structure (40) is larger than 0.5.

13. A method for arranging the device of at least one of the claims 1 to 12 on a body (20) comprising an essentially rotation-symmetric portion, the method comprising the following steps:

i) arranging the rotation-symmetric portion of the body (20) between the clamps (1) and
ii) moving the clamps (1) towards the second position (12), such that the support structure (40) moves towards the central point (P) of the cross-section of the rotation-symmetric portion of the body (20), such that the support structure (40) at least in sections adapts to the shape of the rotation-symmetric portion, and that a contact area between the rotation-symmetric portion and the support structure (40) is maximized.

14. The method according to claim 13, wherein the clamps (1) are fixed in a position between the first and the second position (11,12) or at the second position (12).

15. A method for moving and/or manipulation of an object using the device (100) of at least one of the claims 1 to 12, the method comprising the following steps:

i) arranging a rotation-symmetric portion of the body (20) between the clamps (1), the rotation-symmetric body (20) being or being part of a locomotive system,
ii) moving the clamps (1) towards the second position (12), such that the support structure (40) moves towards a central point (P) of a cross-section of the rotation-symmetric portion of the body (20), such that the support structure (40) at least in sections adapts to the shape of the rotation-symmetric portion, and that a contact area between the rotation-symmetric portion and the support structure (40) is maximized,
iii) fixing the clamps (1) in a position between the first and the second position (11,12) or at the second position (12),
iv) establishing a mechanical connection between the base structure and an object to be moved or manipulated and
v) exerting a force from the device via the base structure (4) to the object in order to move and/ or manipulate the object.

**Patentansprüche**

1. Vorrichtung (100) zur Anordnung an einem Körper (20) mit einem im Wesentlichen rotationssymmetrischen Abschnitt, wobei die Vorrichtung (100) mindestens eine Schnittstelle (30) umfasst, wobei die Schnittstelle (30) umfasst:

- zwei Klemmen (1) mit mindestens einer Schwenkachse (A), wobei jede Klemme (1) eine Klemmspitze (2) umfasst, wobei die jeweilige Klemmspitze (2) der mindestens einen Schwenkachse (A) gegenüberliegend angeordnet ist und die Schwenkachse (A) fest relativ zu einer von der Vorrichtung (100) umfassten Basisstruktur (4) angeordnet ist, wobei die Klemmen (1) dazu eingerichtet sind, um die mindestens eine Schwenkachse (A) jeweils zwischen einer ersten Position (11) und einer zweiten Position (12) verschwenkt zu werden, wobei sich in der ersten Position (11) die Klemmspitzen (2) weiter voneinander entfernt befinden als in der zweiten Position (12),

- eine zwischen den Klemmen (1) angeordnete Stützstruktur (40), wobei die Stützstruktur (40) dazu eingerichtet ist, an dem rotationssymmetrischen Abschnitt des Körpers (20) angeordnet zu werden und/oder diesen zu stützen,

**dadurch gekennzeichnet, dass** die Vorrichtung ferner umfasst:

- ein Stützseilsystem mit mindestens einem Stützseil (50), wobei mindestens ein Stützseil (50) des Seilsystems mit einem relativ zur Basisstruktur (4) fest angeordneten Spannelement (5) verbunden ist, wobei die Verbindung des Spannelements (5) mit dem mindestens einen Stützseil (50) beabstandet von der mindestens einen Schwenkachse (A) angeordnet ist und sich auf der der Stützstruktur (40) gegenüberliegenden Seite der Klemme (1) befindet, wobei sich das Stützseil (50) ferner über eine von jeder der Klemmen (1) bereitgestellte Umlenkeinrichtung (6) erstreckt, wobei die Umlenkeinrichtung (6) einen definierten Abstand zur mindestens einen Schwenkachse (A) der jeweiligen Klemme (1) aufweist, und sich in Richtung der Stützstruktur (40) erstreckt, wobei das mindestens eine Stützseil (50) mit der Stützstruktur (40) verbunden ist oder von dieser geführt ist,

derart, dass ein Verschwenken der Klemmen (1) in Richtung der zweiten Position (12) eine Verlängerung eines ersten Seilabschnitts (51) zwischen dem Spannelement (5) und der Umlenkeinrichtung (6) der jeweiligen Klemme (1), eine Verkürzung eines zweiten Seilabschnitts (52) zwischen der Umlenkeinrichtung (6) und der Stützstruktur (40) sowie eine Bewegung der Stützstruktur (40) in Richtung der Klemmspitzen (2) bewirkt, sodass unabhängig von einer radialen Erstreckung des auf der Stützstruktur (40) angeordneten rotationssymmetrischen Abschnitts des Körpers (20) ein zentraler Punkt (P) eines Querschnitts des rotationssymmetrischen Abschnitts des Körpers (20) einen im Wesentlichen konstanten Abstand zur Basisstruktur (4) aufweist.

2. Vorrichtung (100) zur Anordnung an einem Körper (20) nach Anspruch 1, wobei das Stützseil (50) jeweils über ein jeweiliges Spannelement (5) zu der jeweiligen Umlenkeinrichtung (6) geführt ist.

3. Vorrichtung (100) zur Anordnung an einem Körper (20) nach Anspruch 2, wobei ein Seilendabschnitt (53) des Stützseils (50) an der entsprechenden Klemme (1) fixiert ist.

4. Vorrichtung (100) zur Anordnung an einem Körper (20) nach einem der vorhergehenden Ansprüche, wobei die Umlenkeinrichtung (6) jeweils eine Durchgangsöffnung (7) jeder Klemme (1) umfasst.

5. Vorrichtung (100) zur Anordnung an einem Körper (20) nach einem der vorhergehenden Ansprüche, wobei jede Klemme (1) mit einer Feder (8) verbunden ist, wobei die Feder (8) dazu eingerichtet ist, auf die jeweilige Klemme (1) eine in Richtung der ersten Position (11) gerichtete Kraft auszuüben.

6. Vorrichtung (100) zur Anordnung an einem Körper (20) nach einem der vorhergehenden Ansprüche, ferner umfassend ein Spannelement (9), das dazu eingerichtet ist, die Klemmen (1) in Richtung der zweiten Position (12) zu bewegen.

7. Vorrichtung (100) zur Anordnung an einem Körper (20) nach einem der vorhergehenden Ansprüche, ferner umfassend ein Fixiersystem (10), das dazu eingerichtet ist, die Klemmen (1) in der zweiten Position (12) oder zwischen der ersten und der zweiten Position (11, 12) zu fixieren.

8. Vorrichtung (100) zur Anordnung an einem Körper (20) nach Anspruch 7, ferner umfassend einen Kraft- und/oder Drehmomentsensor, wobei der Kraft- und/oder Drehmomentsensor dazu eingerichtet ist, eine Kraft und/oder ein Drehmoment zu messen, die bzw. das auf den an der Stützstruktur (40) angeordneten Körper (20) ausgeübt wird und/oder von diesem ausgeübt wird.

9. Vorrichtung (100) zur Anordnung an einem Körper (20) nach einem der vorhergehenden Ansprüche, umfassend mindestens zwei Schnittstellen (30), wobei die Schnittstellen (30) durch eine Verbindungsstruktur (60) miteinander verbunden sind.

10. Vorrichtung (100) zur Anordnung an einem Körper (20) nach Anspruch 9, wobei die Verbindungsstruktur (60) Abstandselemente (61) umfasst, die dazu eingerichtet sind, eine Verschiebung zwischen den Schnittstellen (30) entlang einer Achse (B) einzustellen und/oder zu fixieren.

11. Vorrichtung (100) zur Anordnung an einem Körper (20) nach einem der vorhergehenden Ansprüche, wobei jede Klemme (1) mit einem Zahnrad (3) versehen ist, wobei beide Zahnräder (3) miteinander im Eingriff stehen, sodass beim Verschwenken einer der Klemmen (1) in eine Rotationsrichtung die rotierenden Zahnräder (3) bewirken, dass die andere Klemme (1) in eine entgegengesetzte Rotationsrichtung verschwenkt wird.

12. Vorrichtung (100) zur Anordnung an einem Körper (20) nach einem der vorhergehenden Ansprüche, wobei in der zweiten Position (12) ein Verhältnis zwischen der Länge des ersten Seilabschnitts (51) und der Länge des zweiten Seilabschnitts (52), insbesondere ein Verhältnis zwischen der Länge des ersten Seilabschnitts (51) und der Länge eines Seilabschnitts, der sich von der Umlenkeinrichtung (6) bis zum Zentrum der Stützstruktur (40) erstreckt, größer als 0,5 ist.

13. Verfahren zum Anordnen der Vorrichtung nach einem der Ansprüche 1 bis 12 an einem Körper (20) mit einem im Wesentlichen rotationssymmetrischen Abschnitt, wobei das Verfahren die folgenden Schritte umfasst:

i) Anordnen des rotationssymmetrischen Abschnitts des Körpers (20) zwischen den Klemmen (1) und

ii) Bewegen der Klemmen (1) in Richtung der zweiten Position (12), sodass sich die Stützstruktur (40) in Richtung des zentralen Punkts (P) des Querschnitts des rotationssymmetrischen Abschnitts des Körpers (20) bewegt, sodass sich die Stützstruktur (40) zumindest abschnittsweise an die Form des rotationssymmetrischen Abschnitts anpasst und eine Kontaktfläche zwischen dem rotationssymmetrischen Abschnitt und der Stützstruktur (40) maximiert wird.

14. Verfahren nach Anspruch 13, wobei die Klemmen (1) in einer Position zwischen der ersten und der zweiten Position (11, 12) oder in der zweiten Position (12) fixiert werden.

15. Verfahren zum Bewegen und/oder Manipulieren eines Objekts unter Verwendung der Vorrichtung (100) nach einem der Ansprüche 1 bis 12, wobei das Verfahren die folgenden Schritte umfasst:

i) Anordnen eines rotationssymmetrischen Abschnitts des Körpers (20) zwischen den Klemmen (1), wobei der rotationssymmetrische Körper (20) ein Fortbewegungssystem ist oder Teil eines solchen ist,

ii) Bewegen der Klemmen (1) in Richtung der zweiten Position (12), sodass sich die Stützstruktur (40) in Richtung eines zentralen Punkts (P) eines Querschnitts des rotationssymmetrischen Abschnitts des Körpers (20) bewegt, sodass sich die Stützstruktur (40) zumindest abschnittsweise an die Form des rotationssymmetrischen Abschnitts anpasst und eine Kontaktfläche zwischen dem rotationssymmetrischen Abschnitt und der Stützstruktur (40) maximiert wird,

iii) Fixieren der Klemmen (1) in einer Position zwischen der ersten und der zweiten Position (11, 12) oder in der zweiten Position (12),

iv) Herstellen einer mechanischen Verbindung zwischen der Basisstruktur (4) und einem zu bewegenden oder zu manipulierenden Objekt und

v) Ausüben einer Kraft von der Vorrichtung über die Basisstruktur (4) auf das Objekt, um das Objekt zu bewegen und/oder zu manipulieren.

## Revendications

1. Dispositif (100) destiné à être disposé sur un corps (20) comprenant une partie de rotation essentiellement symétrique, le dispositif (100) comprenant au moins une interface (30), l'interface (30) comprenant:

- deux pinces (1) avec au moins un axe de pivotement (A), chaque pince (1) comprenant une extrémité de serrage (2), l'extrémité de serrage (2) correspondante étant disposée à l'opposé de l'au moins un axe de pivotement (A), et l'axe de pivotement (A) étant disposé de manière fixe par rapport à une structure de base (4) comprise par le dispositif (100), les pinces (1) étant configurées pour pivoter autour de l'au moins un axe de pivotement (A) respectivement entre une première position (11) et une deuxième position (12), dans laquelle, dans la première position (11), les extrémités de serrage (2) sont espacées l'une de l'autre davantage que dans la deuxième position (12),

- une structure de support (40) disposée entre les pinces (1), la structure de support (40) étant configurée pour être disposée sur et/ou pour supporter la partie de rotation symétrique du corps (20) **caractérisé en ce que** le dispositif comprend en outre :

- un système de câbles de support comprenant au moins un câble de support (50), au moins un câble de support (50) du système étant relié à un élément de mise en tension (5) fixé par rapport à la structure de base (4), la liaison entre l'élément de mise en tension (5) et l'au moins un câble de support (50) étant espacée de l'au moins un axe de pivotement (A) et disposée du côté opposé de la pince (1) par rapport à la structure de support (40), le câble de support (50) s'étendant en outre à travers un moyen de renvoi (6) prévu sur chacune des pinces (1), le moyen de renvoi (6) présentant une distance définie par rapport à l'au moins un axe de pivotement (A) de la pince (1) correspondante, et s'étendant en direction de la structure de support (40), l'au moins un câble de support (50) étant relié à la structure de support (40) ou guidé par celle-ci,

de telle sorte que le pivotement des pinces (1) vers la seconde position (12) provoque un allongement d'une première section de câble (51) située entre l'élément de mise en tension (5) et le moyen de renvoi (6) de la pince (1) correspondante, un raccourcissement d'une seconde section de câble (52) située entre le moyen de renvoi (6) et la structure de support (40), ainsi qu'un déplacement de la structure de support (40) vers les extrémités de serrage (2), de sorte que, indépendamment de l'étendue radiale de la partie de rotation symétrique du corps (20) disposée sur la structure de support (40), un point central (P) d'une section transversale de la partie de rotation symétrique du corps (20) présente une distance essentiellement constante par rapport à la structure de base (4).

2. Dispositif (100) destiné à être disposé sur un corps (20) selon la revendication 1, dans lequel le câble de support (50) est guidé via un élément de mise en tension (5) correspondant vers le moyen de renvoi (6) correspondant.

3. Dispositif (100) destiné à être disposé sur un corps (20) selon la revendication 2, dans lequel une portion d'extrémité de câble (53) du câble de support (50) est fixée à la pince (1) correspondante.

4. Dispositif (100) destiné à être disposé sur un corps (20) selon l'une quelconque des revendications précédentes, dans lequel le moyen de renvoi (6) comprend, pour chaque pince (1), un trou traversant (7).

5. Dispositif (100) destiné à être disposé sur un corps (20) selon l'une quelconque des revendications précédentes, dans lequel chaque pince (1) est reliée à un ressort (8), le ressort (8) étant configuré pour exercer sur la pince (1) correspondante une force dirigée vers la première position (11).

6. Dispositif (100) destiné à être disposé sur un corps (20) selon l'une quelconque des revendications précédentes, comprenant en outre un élément de serrage (9) configuré pour déplacer les pinces (1) vers la deuxième position (12).

7. Dispositif (100) destiné à être disposé sur un corps (20) selon l'une quelconque des revendications précédentes, comprenant en outre un système de fixation (10) configuré pour fixer les pinces (1) dans la deuxième position (12) ou entre la première et la deuxième position (11, 12).

8. Dispositif (100) destiné à être disposé sur un corps (20) selon la revendication 7, comprenant en outre un capteur de force et/ou de couple, le capteur de force et/ou de couple étant configuré pour mesurer une force et/ou un couple exercé sur et/ou par le corps (20) disposé sur la structure de support (40).

9. Dispositif (100) destiné à être disposé sur un corps (20) selon l'une quelconque des revendications précédentes, comprenant au moins deux interfaces (30), les interfaces (30) étant reliées entre elles par une structure de liaison (60).

10. Dispositif (100) destiné à être disposé sur un corps (20) selon la revendication 9, dans lequel la structure de liaison (60) comprend des éléments d'espacement (61) configurés pour régler et/ou fixer un déplacement entre les interfaces (30) le long d'un axe (B).

11. Dispositif (100) destiné à être disposé sur un corps (20) selon l'une quelconque des revendications précédentes, dans lequel chaque pince (1) est pourvue d'un engrenage (3), les deux engrenages (3) étant en prise l'un avec l'autre, de sorte que, lorsque l'une des pinces (1) est pivotée dans une direction de rotation, les engrenages (3) en rotation provoquent le pivotement de l'autre pince (1) dans une direction de rotation opposée.

12. Dispositif (100) destiné à être disposé sur un corps (20) selon l'une quelconque des revendications précédentes, dans lequel, dans la deuxième position (12), un rapport entre la longueur de la première section de câble (51) et la longueur de la deuxième section de câble (52), en particulier un rapport entre la longueur de la première section de câble (51) et la longueur d'une section de câble s'étendant du moyen de renvoi (6) jusqu'au centre de la structure de support (40), est supérieur à 0,5.

**13.** Procédé de mise en place du dispositif selon l'une quelconque des revendications 1 à 12 sur un corps (20) comprenant une partie de rotation symétrique , le procédé comprenant les étapes suivantes :

    i) disposer la partie de rotation symétrique du corps (20) entre les pinces (1), et
    ii) déplacer les pinces (1) vers la deuxième position (12), de sorte que la structure de support (40) se déplace vers le point central (P) de la section transversale de la partie de rotation symétrique du corps (20), de sorte que la structure de support (40) s'adapte au moins partiellement à la forme de la partie de rotation symétrique, et qu'une surface de contact entre la partie de rotation symétrique et la structure de support (40) est maximisée.

**14.** Procédé selon la revendication 13, dans lequel les pinces (1) sont fixées dans une position comprise entre la première et la deuxième position (11, 12) ou dans la deuxième position (12).

**15.** Procédé de déplacement et/ou de manipulation d'un objet au moyen du dispositif (100) selon l'une quelconque des revendications 1 à 12, le procédé comprenant les étapes suivantes :

    i) disposer une partie de rotation symétrique du corps (20) entre les pinces (1), le corps (20) de rotation étant ou faisant partie d'un système de locomotion,
    ii) déplacer les pinces (1) vers la deuxième position (12), de sorte que la structure de support (40) se déplace vers un point central (P) d'une section transversale de la partie de rotation symétrique du corps (20), de sorte que la structure de support (40) s'adapte au moins partiellement à la forme de la partie de rotation symétrique , et qu'une surface de contact entre la partie de rotation symétrique et la structure de support (40) est maximisée,
    iii) fixer les pinces (1) dans une position comprise entre la première et la deuxième position (11, 12) ou dans la deuxième position (12),
    iv) établir une liaison mécanique entre la structure de base (4) et un objet à déplacer ou à manipuler, et
    v) exercer une force depuis le dispositif, via la structure de base (4), sur l'objet afin de déplacer et/ou de manipuler l'objet.

Fig. 1

Fig. 2

Fig. 3

Fig. 4

Fig. 5

Fig. 6

Fig. 7

Fig. 8

Fig. 9

**EP 4 422 833 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019254915 A1